# FASCICULE DE BREVET EUROPEEN

(11) **EP 2 817 167 B1**
(45) Date de publication et mention de la délivrance du brevet: **30.03.2016**
(21) Numéro de dépôt: 13706593.4
(22) Date de dépôt: 30.01.2013
(51) Int. Cl.: B60K 17/16, B60K 17/10, F16H 61/44, F03C 1/06

(54) **MODULE HYDRAULIQUE COMPACT POUR VÉHICULE HYBRIDE HYDRAULIQUE**
KONPAKTES HYDRAULIKMODUL FÜR HYBRIDES HYDRAULISCHES FAHRZEUG
COMPACT HYDRAULIC MODULE FOR HYDRAULIC HYBRID VEHICLE

(30) Priorité: 24.02.2012 FR 1251717
(43) Date de publication de la demande: 31.12.2014
(73) Titulaire: Technoboost, 75116 Paris (FR)
(72) Inventeur: GIANNONI, Marc, F-75009 Paris (FR); ROUSS, Vicky, F-92800 Puteaux (FR); WASCHEUL, Michael, F-78260 Achères (FR)
(74) Mandataire: Rosenberg, Muriel Sylvie
(86) Numéro de dépôt international: PCT/FR2013/050190
(87) Numéro de publication internationale: WO 2013/124557

(56) Documents cités:
- EP-A1- 1 533 168
- DE-A1- 19 639 732
- FR-A1- 2 112 336
- JP-A- 2001 355 705
- ACHTEN P: "KEINE KOMPROMISSEN -HYDROSTATISCHER ALLRADANTRIEB FUER AUTOMOBILE UND ANDERE FAHRZEUGE", O + P OLHYDRAULIK UND PNEUMATIK, VEREINIGTE FACHVERLAGE, MAINZ, DE, vol. 52, no. 3, 1 mars 2008 (2008-03-01), pages 92-96, XP001511836, ISSN: 0341-2660

## Description

La présente invention concerne les véhicules hybrides hydrauliques et se rapporte plus particulièrement à un module hydraulique comportant un ou plusieurs moteurs hydrauliques, couplés au différentiel du véhicule pour fournir une puissance motrice aux roues du véhicule.

Un véhicule hybride hydraulique se différencie d'un véhicule hybride électrique par sa source de puissance hydraulique en lieu et place d'une source de puissance d'origine électrique.

Dans un véhicule hybride hydraulique, la boîte de vitesses classique est remplacée ou complétée par un circuit hydraulique fermé.

Une source d'énergie rotative (souvent un moteur thermique voire électrique) entraîne une ou plusieurs pompes hydrauliques volumétriques, de préférence à cylindrée variable de haute précision.

La pompe hydraulique transforme l'énergie mécanique en énergie hydraulique. Cette énergie est stockée dans un ou des accumulateurs haute pression et est ensuite restituée dans le/les moteurs hydrauliques pour propulser le véhicule.

Ainsi, les moteurs hydrauliques transforment l'énergie hydraulique en énergie mécanique.

On connaît plusieurs types d'architecture pour des transmissions hybrides hydrauliques :
- une architecture dite « série »,
- une architecture dite « parallèle ou
- une architecture dite à « dérivation » (dérivation de puissance mettant en oeuvre un ou plusieurs trains épicycloïdaux).

Avec une transmission de type « parallèle », le système hydraulique vient en général se greffer sur la transmission classique du véhicule, ayant comme rôle d'optimiser le système initial.

Une transmission de type « série », remplace complètement l'architecture de la transmission classique : elle comporte une liaison hydraulique entre le moteur thermique et la roue.

La transmission de type «dérivation» est une architecture mixte permettant d'obtenir une transmission série ou parallèle.

On connaît également différents types des pompes ou moteurs hydrauliques couplés à ces différentes architectures de transmission hydrauliques.

La pompe (ou le moteur, en fonction du sens de rotation et de son utilisation) hydraulique, utilisée pour de telles transmissions, est souvent une pompe volumétrique à pistons, notamment des pompes à pistons axiaux en ligne avec un barillet tournant.

L'autre famille de pompe volumétrique utilisée aussi, est celle des pompes à piston radiaux.

Dans une pompe volumétrique, le fluide est isolé dans une chambre à volume variable pour être transféré de la zone d'aspiration (basse pression) vers la zone de refoulement (haute pression).

Ce type de pompe est dit volumétrique car elle véhicule un volume de fluide à chaque tour de fonctionnement : ce volume par tour de fonctionnement est appelé cylindrée.

Généralement, pour les pressions hydrauliques élevées (supérieure à 300 bars), on utilise des pompes à pistons axiaux de type à patins ou à rotules pour les axes brisés ou des pompes à piston radiaux sur galet.

Il est connu également, notamment des documents EP1468169 et EP1907700, une technologie de type « floating-cup » (cylindres flottants) permettant d'obtenir des rendements mécaniques et hydrauliques supérieurs à ceux atteints par les technologies de pompes conventionnelles.

Le document EP 1533 168 décrit un module hydraulique compact similaire à celui de l'invention mais ne comportant pas un des deux moteurs qui supporte en rotation l'autre, les moteurs ne comportant pas des cylindres flottants.

On se référera à ces documents pour la description détaillée de cette technologie.

Dans le cadre d'une transmission hydraulique, l'entraînement d'un différentiel avec un moteur hydraulique nécessite l'encombrement d'un différentiel et d'un ou deux moteurs hydrauliques US2005070390 (voir Fig. 5) ou WO2005075233.

On greffe ces composants hydrauliques sur le boîtier des différentiels avant (pour les tractions avant), arrière pour les propulsions et avant et/ou arrière et/ou central pour les véhicules tout terrain (4x4). Ces solutions présentent des architectures simples sur le papier mais dont l'implantation dans le compartiment moteur et dans le soubassement arrière est difficile du fait de l'encombrement relativement important de ces architectures.

Un but de la présente invention est de proposer un module hydraulique compact avec une architecture simple, facile à implanter dans un véhicule tout en conservant au maximum l'architecture organique du véhicule que l'on veut hybrider hydrauliquement.

A cet effet, l'invention a pour objet un module hydraulique compact pour fournir une puissance motrice à un véhicule, comprenant un carter dans lequel sont logés un premier et un second moteur hydraulique, montés en opposition, un des deux moteurs étant supporté en rotation par l'autre, chaque moteur comprenant une glace de distribution, une plaque supportant des cylindres flottants, une plaque de maintien axial des cylindres flottants sur la plaque de support, un plateau et des pistons fixes disposés entre le plateau et les cylindres flottants et coopérant avec eux ; lesdits moteurs hydrauliques convertissant l'énergie provenant d'un fluide sous pression en énergie mécanique sous la forme d'un couple entrainant un différentiel, contenu dans le même carter, et dont les arbres de sorties sont couplés aux roues motrices du véhicule ; ledit différentiel comportant un organe de couplage axial apte à accoupler les deux moteurs hydrauliques et configuré pour distribuer le couple vers les arbres de sortie du différentiel, dans lequel le différentiel est monté en rotation à l'intérieur du moteur hydraulique, et l'axe de rotation du moteur hydraulique est confondu avec l'axe de rotation du différentiel.

L'intérêt principal de cette invention est le gain de place acquis grâce à l'intégration du différentiel à l'intérieur d'un moteur hydraulique avec le principe des pistons fixes et cylindres flottants (floating-cup).

Le volume sous le capot et/ou sous le plancher du véhicule, est équivalent au volume d'un ou de deux moteurs hydrauliques pour un véhicule hybride hydraulique.

Le boîtier du différentiel sert de corps de pompe du moteur hydraulique. Ce qui permet de gagner un volume sous le capot équivalent au volume du différentiel, tout en conservant le même différentiel classique.

Pour l'hybridation hydraulique série, cette intégration supprime le couple pignon/ couronne de différentiel.

Un module unique servira de différentiel et de pompe hydraulique. Ce qui permettra de gagner de la place sous le capot et aussi de simplifier l'architecture de l'hybride hydraulique.

On utilise les mêmes roulements pour le différentiel et pour les arbres de support du moteur hydraulique.

La lubrification du différentiel est effectuée par l'huile du moteur hydraulique. (Différentiel de type étanche).

L'implantation des composants du mode hydraulique est totalement symétrique. Le sous-ensemble de droite est identique à celui de gauche.

En inversant le sens des plateaux, pour des moteurs à cylindrée variable, on peut avantageusement utiliser le module hydraulique pour faire de la récupération d'énergie au freinage ou un roulage en marche arrière.

Ces fonctions peuvent également être obtenues en inversant et en contrôlant hydrauliquement les sortie basse pression et haute pression.

Les moteurs hydrauliques deviennent alors des pompes qui rechargent l'accumulateur haute pression.

Le fait d'intégrer le moteur hydraulique et le différentiel dans un même carter d'un module hydraulique permet de conserver au maximum l'architecture organique du véhicule que l'on veut hybrider hydrauliquement.

Ainsi, il n'y aura pas de modification au niveau des portes moyeux des roues, modification souvent nécessaire pour l'intégration du moteur hydraulique et de son réducteur. Un réducteur est indispensable quand on veut réduire les dimensions du moteur et donc, pour la même puissance à passer, on doit augmenter son régime qui devient alors incompatible avec celui des roues du véhicule.

Ce type de montage est néfaste pour le confort de la suspension, car on augmente les masses non-suspendues (poids moteur et réducteur ajouté à celui de la roue).

L'invention sera mieux comprise et d'autres avantages ressortiront à la lecture de la description qui suit, donnée uniquement à titre d'exemple non limitatif et faite en référence aux dessins sur lesquels :

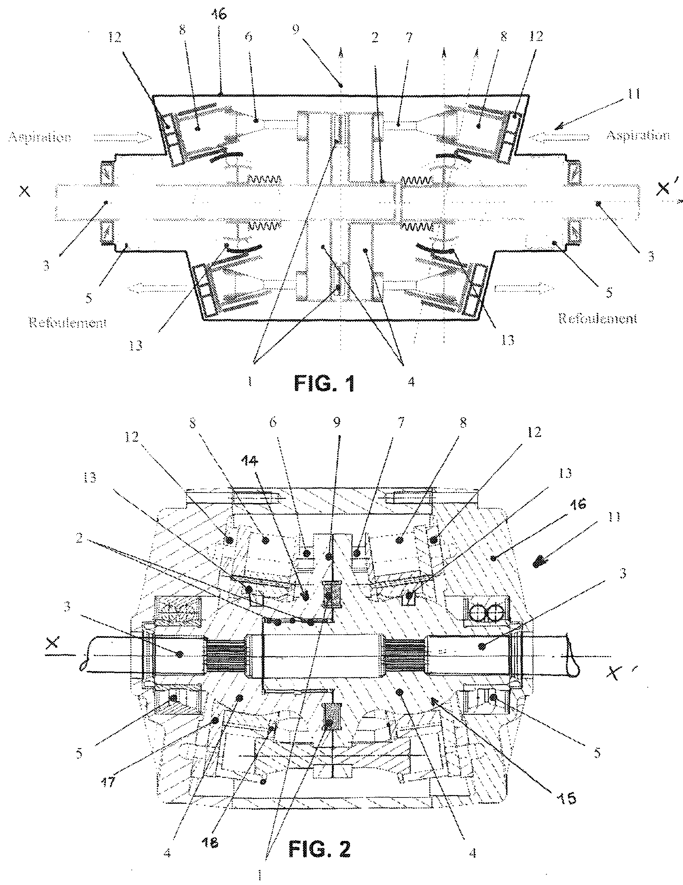

- la figure 1 illustre le schéma fonctionnel, en coupe longitudinale, du module hydraulique selon l'invention ; et
- la figure 2 illustre le dessin en coupe longitudinale du module hydraulique selon l'invention.

Sur les figures, les mêmes références numériques désignent les mêmes composants.

Le module hydraulique compact 11 selon l'invention comprend un carter 16 dans lequel sont logés un premier et un second moteur hydraulique 14 et 15, respectivement gauche et droit, montés en opposition.

L'un 15 des deux moteurs est supporté librement en rotation par l'autre 14 via des paliers à aiguille (ou rouleaux) 2

Les moteurs hydrauliques gauche et droit convertissent l'énergie provenant d'un fluide sous pression, en énergie mécanique sous la forme d'un couple entraînant un différentiel, contenu dans le même carter et dont les arbres de sortie 3 sont couplés aux roues motrices du véhicule (non représentées).

Le différentiel comporte deux boîtiers 4, montés en opposition, présentant chacun un flasque ; chaque flasque définissant le plateau de chacun des premier et second moteurs hydrauliques, gauche et droit, centrés sur l'axe de rotation XX' du différentiel.

Il est disposé au centre du carter du module hydraulique ; les plateaux s'étendant parallèlement entre eux, suivant un plan perpendiculaire au plan par lequel passe l'axe de rotation XX' du moteur hydraulique.

Le différentiel est monté en rotation à l'intérieur du moteur hydraulique, et l'axe de rotation XX' du moteur hydraulique est confondu avec l'axe de rotation du différentiel.

Le différentiel comporte un organe de couplage axial 1, notamment une butée à rouleaux (à billes ou à aiguilles), disposée entre, et en contact avec, les faces des flasques qui sont en regard l'une de l'autre.

La butée axiale est apte à coopérer avec les deux moteurs hydrauliques gauche et droit, de manière à distribuer le couple vers les arbres de sortie couplés aux roues.

Les faces des deux flasques, en regard l'une de l'autre, définissent respectivement un plan de roulement pour les rouleaux de la butée axiale. Les rouleaux peuvent être remplacés par des billes ou des aiguilles.

Chaque sous-ensemble du moteur hydraulique comporte une série de pistons gauche 6, respectivement droit 7, dont les premières extrémités sont fixées au plateau et dont les deuxièmes extrémités sont reçues à coulissement dans un ensemble de cylindres flottants supportés par une plaque support 17.

Les cylindres flottants comportent un nombre déterminé de chemises recevant respectivement les deuxièmes extrémités des pistons.

Le fond des chemises comporte un orifice assurant une communication avec la glace de distribution, au travers de la plaque support, pour le passage du fluide en mode aspiration (basse pression) ou en en mode refoulement (haute pression) du moteur hydraulique.

Une plaque de maintien axial 18 des cylindres flottants est disposée sur la face ouverte des cylindres ; la plaque de maintien étant munie d'ouvertures venant en regard des ouvertures des chemises des cylindres.

La paroi sur laquelle sont plaqués le barillet et la glace de distribution, est inclinée par rapport au plan des plateaux d'un angle déterminé non nul (de l'ordre de 15°à 22°).

Chaque boîtier du différentiel comporte une extension cylindrique centrée sur l'axe de rotation du moteur hydraulique, s'étendant suivant une direction opposée au flasque ; ladite extension définissant un arbre du moteur hydraulique comportant un logement interne recevant un des arbres de sortie du différentiel ; l'arbre de sortie étant couplé en rotation avec l'arbre du moteur hydraulique.

Chaque arbre du moteur hydraulique comporte un premier épaulement définissant une première portée cylindrique sur laquelle est monté un pallier 5 permettant de supporter l'arbre du moteur hydraulique à rotation dans le carter du module hydraulique.

Chaque demi-boîtier est conformé pour présenter une portée rotulaire, adjacente à la première, recevant un joint homocinétique à billes à centre fixe 13 du type à bille, à tripode ou autre, voire coulissant, supportant et entraînant en rotation la glace de distribution, la plaque support, les cylindres flottants et la plaque de maintien.

On retrouve le fonctionnement d'un différentiel classique, mettant en oeuvre une transmission de couple libre entre les deux arbres de roue d'un même essieu.

Deux cas de figures peuvent se présenter :
- Dans un premier cas de figure, les deux arbres de sortie, reliés respectivement aux roues, tournent à la même vitesse : l'effort de rotation est donc réparti équitablement sur chacune des roues.
- Dans un deuxième cas de figure, les deux arbres de sortie ne tournent pas à la même vitesse (cas du virage) : il y alors une rotation différentielle entre les deux moteurs hydrauliques.

Ainsi, la boîte de vitesses classique et la couronne du différentiel et ses composants internes sont remplacées par deux moteurs hydrauliques qui produisent un couple à partir de la pression hydraulique stockée dans les accumulateurs ou fournis par une ou plusieurs pompe et l'applique directement aux arbres de roue d'un même essieu.

La présente invention est applicable quel que soit le nombre de pistons dans le moteur/pompe hydraulique et le nombre de satellites dans le différentiel.

Elle peut s'appliquer également à d'autres technologies de pompes comme les pompes à pistons radiaux.

Elle est applicable pour des différentiels avant et/ou les différentiels arrière pour des véhicules à deux roues motrices et les différentiels centraux pour des véhicules à quatre roues motrices.

Elle est applicable quel que soit le type de joint homocinétique utilisé.

Dans une variante, le module hydraulique selon l'invention peut comporter un différentiel avec une couronne au cas où on veut ajouter à la transmission hydrostatique une boîte de vitesses classique avec un ou plusieurs rapports.

Dans ce cas, la boîte de vitesses classique transmet le couple au différentiel par la couronne du différentiel et le moteur hydraulique transmet le couple au différentiel par le boîtier du différentiel.

Elle est aussi valable quel que soit le type de pilotage (en pression et/ou en débit) des moteurs hydrauliques.

Le pilotage, en débit et en pression des deux moteurs hydrauliques, de façon séparée permet de bénéficier des configurations différentielles suivantes :
- différentiel libre (comme la plupart des différentiels mécaniques) ;
- différentiel à glissement limité avec un taux de blocage variable et pilotable ;
- différentiel bloqué (type pont bloqué sur véhicule 4x4) ;
- fonction ASR pour amélioration de la motricité ;
- fonction ESP pour les véhicules 4x4.

## Revendications

1. Module hydraulique compact (11) pour fournir une puissance motrice à un véhicule, comprenant un carter (16) dans lequel sont logés un premier (14) et un second (15) moteur hydraulique, montés en opposition, un des deux moteurs étant supporté en rotation par l'autre, chaque moteur comprenant une glace de distribution (12), une plaque (17) supportant des cylindres flottants (8), une plaque de maintien axial (18) des cylindres flottants sur la plaque de support, un plateau (9) et des pistons fixes (6, 7) disposés entre le plateau et les cylindres flottants et coopérant avec eux ; lesdits moteurs hydrauliques convertissant l'énergie provenant d'un fluide sous pression en énergie mécanique sous la forme d'un couple entraînant un différentiel, contenu dans le même carter, et dont les arbres de sorties sont couplés aux roues motrices du véhicule ; ledit différentiel comportant un organe de couplage axial (1) apte à accoupler les deux moteurs hydrauliques et configuré pour distribuer le couple vers les arbres de sortie du différentiel, dans lequel le différentiel est monté en rotation à l'intérieur du moteur hydraulique, et l'axe de rotation du moteur hydraulique est confondu avec l'axe de rotation du différentiel.

2. Module hydraulique selon la revendication précédente, **caractérisé en ce que** le différentiel comporte deux boîtiers (4), montés en opposition, présentant chacun un flasque ; chaque flasque définissant le plateau de chacun des premier et second moteurs hydrauliques, centrés sur l'axe de rotation du différentiel ; les deux moteurs hydrauliques étant couplés axialement entre eux par une butée axiale (1) centrée sur l'axe de rotation du différentiel, disposée entre les deux plateaux ; chaque premier et second moteur hydraulique comportant une série de pistons dont les premières extrémités sont fixées au plateau et dont les deuxièmes extrémités sont reçue à coulissement dans les cylindres flottants ; la plaque support (17) étant plaquée contre la glace de distribution en appui sur la paroi interne du carter du module hydraulique.

3. Module hydraulique selon la revendication précédente, **caractérisé en ce que** les cylindres flottants comportent des chemises recevant les deuxièmes extrémités des pistons ; le fond des chemises communiquant avec la glace de distribution au travers de la plaque support pour le passage du fluide en mode aspiration ou en en mode refoulement du moteur hydraulique.

4. Module hydraulique selon la revendication précédente, **caractérisé en ce que** le différentiel est disposé au centre du carter du module hydraulique ; les plateaux s'étendant parallèlement entre eux, suivant un plan perpendiculaire au plan par lequel passent l'axe de rotation du moteur hydraulique.

5. Module hydraulique selon la revendication précédente, **caractérisé en ce que** chaque boîtier du différentiel comporte une extension cylindrique centrée sur l'axe de rotation du moteur hydraulique, s'étendant suivant une direction opposée au flasque ; ladite extension définissant un arbre du moteur hydraulique comportant un logement interne recevant un des arbres de sortie du différentiel ; l'arbre de sortie étant couplé en rotation avec l'arbre du moteur hydraulique.

6. Module hydraulique selon la revendication précédente, **caractérisé en ce que** chaque arbre du moteur hydraulique comporte un premier épaulement définissant une première portée cylindrique sur laquelle est monté un pallier (5) permettant de supporter l'arbre du moteur hydraulique en rotation dans le carter du module hydraulique.

7. Module hydraulique selon la revendication précédente, **caractérisé en ce que** la paroi sur laquelle sont plaqués la plaque support et la glace de distribution, est inclinée par rapport au plan des plateaux d'un angle déterminé non nul.

8. Module hydraulique selon la revendication précédente, caractérisé en chaque boîtier est conformé pour présenter une portée rotulaire, adjacente à la première, définissant une partie d'un joint homocinétique supportant en rotation la glace de distribution, la plaque support, les cylindres flottants et la plaque de maintien.

9. Véhicule hybride hydraulique comportant un module hydraulique compact selon l'une des revendications précédentes.

10. Véhicule hybride hydraulique selon la revendication précédente, **caractérisé en ce que** le véhicule est un véhicule hybride série.

## Patentansprüche

1. Kompaktes hydraulisches Modul (11) zum Liefern einer Antriebsleistung zu einem Fahrzeug, das ein Gehäuse (16) umfasst, in dem ein erster (14) und ein zweiter hydraulischer Motor (15), die in Gegenüberstellung montiert sind, aufgenommen sind, wobei einer der zwei Motoren in Drehung von dem anderen getragen wird, wobei jeder Motor eine Verteilerscheibe (12), eine Platte (17), die schwimmende Zylinder (8) trägt, eine axiale Halteplatte (18) der schwimmenden Zylinder auf der Tragplatte, eine Platte (9) und fixe Kolben (6, 7), die zwischen der Platte und den schwimmenden Zylindern angeordnet sind und mit ihnen zusammenwirken, umfasst, wobei die hydraulischen Motoren Energie, die von einem Fluid unter Druck stammt, in mechanische Energie in der Form eines Drehmoments umwandeln, das ein Differenzial, das in demselben Gehäuse enthalten ist, antreibt, und dessen Ausgangswellen mit Antriebsrädern des Fahrzeugs gekuppelt sind, wobei das Differenzial ein axiales Kupplungsorgan (1) umfasst, das geeignet ist, mit den zwei hydraulischen Motoren zu kuppeln, und konfiguriert ist, um das Drehmoment zu den Ausgangswellen des Differenzials zu verteilen, wobei das Differenzial in Drehung im Inneren des hydraulischen Motors montiert ist und die Rotationsachse des hydraulischen Motors mit der Rotationsachse des Differenzials zusammenfällt.

2. Hydraulisches Modul nach dem vorhergehenden Anspruch, **dadurch gekennzeichnet, dass** das Differenzial zwei Gehäuse (4) umfasst, die in Opposition montiert sind, die jeweils einen Flansch aufweisen, wobei jeder Flansch die Platte jedes des ersten und des zweiten hydraulischen Motors definiert, die auf der Rotationsachse des Differenzials zentriert sind, wobei die zwei hydraulischen Motoren axial miteinander durch einen axialen Anschlag (1) gekuppelt sind, der auf der Rotationsachse des Differenzials, die zwischen den zwei Platten angeordnet ist, zentriert ist, wobei der erste und der zweite hydraulische Motor eine Reihe von Kolben umfassen, deren erste Enden an der Platte befestigt sind und deren zweite Enden gleitend in schwimmenden Zylindern aufgenommen sind, wobei die Tragplatte (17) gegen die Verteilerplatte in Auflage auf der Innenwand des Gehäuses des hydraulischen Moduls angedrückt ist.

3. Hydraulisches Modul nach dem vorhergehenden Anspruch, **dadurch gekennzeichnet, dass** die schwimmenden Zylinder Mäntel umfassen, die die zweiten Enden der Kolben aufnehmen, wobei der Grund der Mäntel mit der Verteilerscheibe durch die Tragplatte für das Durchgehen des Fluids im Ansaugmodus oder im Fördermodus des hydraulischen Motors kommuniziert.

4. Hydraulisches Modul nach dem vorhergehenden Anspruch, **dadurch gekennzeichnet, dass** das Differenzial in der Mitte des Gehäuses des hydraulischen Moduls angeordnet ist, wobei sich die Platten parallel zueinander entlang einer Ebene senkrecht zu der Ebene, durch die die Rotationsachse des hydraulischen Motors durchgeht, erstrecken.

5. Hydraulisches Modul nach dem vorhergehenden Anspruch, **dadurch gekennzeichnet, dass** jedes Gehäuse des Differenzials eine zylindrische Erweiterung umfasst, die auf der Rotationsachse des hydraulischen Motors zentriert ist, die sich entlang einer Richtung entgegengesetzt zum Flansch erstreckt, wobei die Erweiterung eine Welle des hydraulischen Motors definiert, die eine innere Aufnahme umfasst, die eine der Ausgangswellen des Differenzials aufnimmt, wobei die Ausgangswelle in Drehung mit der Welle des hydraulischen Motors gekuppelt ist.

6. Hydraulisches Modul nach dem vorhergehenden Anspruch, **dadurch gekennzeichnet, dass** jede Welle des hydraulischen Motors einen ersten Ansatz umfasst, der eine erste zylindrische Auflage definiert, auf die ein Lager (5) montiert ist, das es erlaubt, die Welle des hydraulischen Motors in Drehung in dem Gehäuse des hydraulischen Moduls zu tragen.

7. Hydraulisches Modul nach dem vorhergehenden Anspruch, **dadurch gekennzeichnet, dass** die Wand, auf die die Tragplatte und die Verteilerplatte gedrückt sind, in Bezug auf die Ebene der Platte um einen bestimmten Winkel, der nicht gleich null ist, geneigt ist.

8. Hydraulisches Modul nach dem vorhergehenden Anspruch, **dadurch gekennzeichnet, dass** jedes Gehäuse ausgebildet ist, um eine Kugelauflage aufzuweisen, die neben der ersten liegt, die einen Teil eines homokinetischen Gelenks definiert, das die Verteilerplatte, die Tragplatte, die schwimmenden Zylinder und die Halteplatte in Drehung trägt.

9. Hydraulisches hybrides Fahrzeug, das ein kompaktes hydraulisches Modul nach einem der vorhergehenden Ansprüche umfasst.

10. Hydraulisches hybrides Fahrzeug nach dem vorhergehenden Anspruch, **dadurch gekennzeichnet, dass** das Fahrzeug ein Serienhybridfahrzeug ist.

## Claims

1. A compact hydraulic module (11) for providing a vehicle with drive power, comprising a housing (16) in which a first (14) and a second (15) hydraulic motor are housed, mounted in opposition, one of the two motors being supported in rotation by the other, each motor comprising a distribution plate (12), a plate (17) supporting floating cylinders (8), a plate (18) axially holding the floating cylinders on the support plate, a plate (9) and fixed pistons (6, 7) arranged between the plate and the floating cylinders and cooperating with them; said hydraulic motors converting the energy coming from a pressurised fluid into mechanical energy in the form of torque driving a differential, contained in the same housing, and wherein the output shafts are coupled to the drive wheels of the vehicle; said differential comprising an axial coupling member (1) suitable for coupling the two hydraulic motors and configured to distribute the torque to the output shafts of the differential, wherein the differential is mounted in rotation inside the hydraulic motor, and the axis of rotation of the hydraulic motor coincides with the axis of rotation of the differential.

2. The hydraulic module according to the preceding claim, **characterized in that** the differential comprises two cases (4), mounted in opposition, each having a flange; each flange defining the plate of each of the first and second hydraulic motors, centred on the rotation axis of the differential; the two hydraulic motors being coupled axially with respect to one another by an axial stop (1) centred on the rotation axis of the differential, disposed between the two plates; each first and second hydraulic motor comprising a series of pistons, the first ends of which are fixed to the plate and the second ends of which are slidably received in the floating cylinders; the support plate (17) being arranged flat against the distribution plate resting on the internal wall of the housing of the hydraulic module.

3. The hydraulic module according to the preceding claim, **characterized in that** the floating cylinders comprise sleeves receiving the second ends of the pistons; the bottom of the sleeves communicating with the distribution plate through the support plate for the passage of the fluid in aspiration mode or in discharge mode of the hydraulic motor.

4. The hydraulic module according to the preceding claim, **characterized in that** the differential is disposed in the centre of the housing of the hydraulic module; the plates extending parallel with respect to one another, along a plane perpendicular to the plane through which the axis of rotation of the hydraulic motor passes.

5. The hydraulic module according to the preceding claim, **characterized in that** each case of the differential comprises a cylindrical extension centred on the rotation axis of the hydraulic motor, extending along a direction opposed to the flange; said extension defining a shaft of the hydraulic motor comprising an internal housing receiving one of the output shafts of the differential; the output shaft being coupled in rotation with the shaft of the hydraulic motor.

6. The hydraulic module according to the preceding claim, **characterized in that** each shaft of the hydraulic motor comprises a first shoulder defining a first cylindrical seat on which there is mounted a bearing (5) permitting the shaft of the hydraulic motor to be supported in rotation in the housing of the hydraulic module.

7. The hydraulic module according to the preceding claim, **characterized in that** the wall on which the support plate and the distribution plate are arranged in a flat manner is inclined with respect to the plane of the plates by a defined angle not equal to zero.

8. The hydraulic module according to the preceding claim, **characterized in that** each case is shaped so as to have a swivel seat, adjacent to the first, defining a part of a homokinetic joint supporting in rotation the distribution plate, the support plate, the floating cylinders and the holding plate.

9. A hydraulic hybrid vehicle comprising a compact hydraulic module according to one of the preceding claims.

10. The hydraulic hybrid vehicle according to the preceding claim, **characterized in that** the vehicle is a series hybrid vehicle.
